# EUROPEAN PATENT APPLICATION

(11) **EP 1 783 849 A1**
(43) Date of publication of application: **09.05.2007**
(21) Application number: 05755262.2
(22) Date of filing: 29.06.2005
(51) Int. Cl.: H01M 4/96, H01M 4/88, H01M 8/10

(54) **COMPOSITE BODY, CATALYST STRUCTURE, ELECTRODE FOR SOLID POLYMER FUEL CELL, METHOD FOR PRODUCING SAME, AND SOLID POLYMER FUEL CELL**

(30) Priority: 06.07.2004 JP 2004198953; 12.07.2004 JP 2004204806; 14.07.2004 JP 2004207046
(71) Applicant: Bridgestone Corporation, Tokyo 104-8340 (JP)
(72) Inventor: SUGI, Shinichiro, BRIDGESTONE CORPORATION, Kodaira-shi, Tokyo 1878531 (JP); TOYOSAWA, Shinichi, BRIDGESTONE CORPORATION, Kodaira-shi, Tokyo 1878531 (JP); YOSHIKAWA, Masato, BRIDGESTONE CORPORATION, Kodaira-shi, Tokyo 1878531 (JP); IIZUKA, Munenori, BRIDGESTONE CORPORATION, Kodaira-shi, To kyo 1878531 (JP)
(74) Representative: Whalley, Kevin
(86) International application number: PCT/JP2005/011982
(87) International publication number: WO 2006/003950

(57) **Abstract**

This invention provides a composite body, a catalyst structural body, an electrode for a solid polymer fuel cell and a method for producing the same and a solid polymer fuel cell. More concretely, there are provided (1) a composite body, a catalyst structural body and an electrode for a solid polymer fuel cell being excellent in the electronic conduction, permeability and handling property, (2) an electrode for a solid polymer fuel cell capable of highly expanding a reaction field of an electrochemical reaction at a three-phase interface of a solid polymer electrolyte membrane, a gas and a catalyst layer in a solid polymer fuel cell, and a method for producing the same, and (3) a solid polymer fuel cell being low in the internal resistance, wherein a voltage is preferable to be hardly lowered even in a high current range.

## Description

### TECHNICAL FIELD

This invention relates to a composite body, a catalyst structural body, an electrode for a solid polymer fuel cell and a method for producing the same and a solid polymer fuel cell, and more particularly to (1) a composite body, a catalyst structural body and an electrode for a solid polymer fuel cell being excellent in the electronic conduction, permeability and handling property, (2) an electrode for a solid polymer fuel cell capable of highly expanding a reaction field of an electrochemical reaction at a three-phase interface of a solid polymer electrolyte membrane, a gas and a catalyst layer in a solid polymer fuel cell, and a method for producing the same, and (3) a solid polymer fuel cell being low in the internal resistance, wherein a voltage is preferable to be hardly lowered even in a high current range.

### BACKGROUND ART

Lately, fuel cells attract attention as a cell having a high power generation efficiency and a small environmental burden, and the research and development thereof are widely made. Among the fuel cells, solid polymer fuel cells are high in the power density and low in the working temperature and easy in the miniaturization and cost reduction as compared with the other type fuel cells, so that they are expected to become widely used as a power source for electric cars, a dispersion power generation system and a household cogeneration system.

In general, the solid polymer fuel cell comprises a membrane electrode assembly in which catalyst layers containing a noble metal catalyst are arranged on both faces of a solid polymer electrolyte membrane and a carbon paper, carbon cloth or the like is disposed on an outside of the catalyst layer as a gas diffusion layer. Furthermore, an electrically conductive separator provided with gas flowing channels is disposed on the outside of the gas diffusion layer. Such a separator plays a role for passing a fuel gas or an oxidizer gas and for conducting a current from the gas diffusion layer to an exterior to take out electric energy.

Heretofore, the catalyst layer mainly comprises a noble metal supported catalyst formed by supporting a noble metal on a granular carbon and a polymer electrolyte, and is prepared by forming a paste or a slurry of a noble metal supported catalyst, a polymer electrolyte and an organic solvent on a carbon paper or the like through a screen printing process, a deposition process, a spraying process or the like, or by forming the paste or slurry on a previously provided substrate in the form of a sheet and then transferring onto the solid polymer electrolyte membrane through a hot pressing or the like. The polymer electrolyte included in the catalyst layer has a function of dissolving hydrogen diffused from the gas diffusion layer, and a polymer having an excellent ion conduction such as ion exchange resin or the like is usually used (see "Chemical review No. 49, Material Chemistry of New Type Cells", edited by The Chemical Society of Japan, Institute Publishing Center, 2001, p. 180-182; and "Solid Polymer Fuel Cells <2001>", The Technical Information Society, 2001, p. 14-15).

### DISCLOSURE OF THE INVENTION

As mentioned above, the fuel gas or the oxidizer gas is supplied to the electrode comprising the gas diffusion layer and the catalyst layer through the separator, but if a permeability of the electrode is insufficient, mass transfers of the fuel gas or the oxidizer gas at the electrode are not smoothly carried out and there is a problem that an output power of the fuel cell is lowered. Also, if an electronic conduction of the electrode comprising the gas diffusion layer and the catalyst layer is low, an internal resistance of the fuel cell is increased and electric energy cannot be effectively taken out. Furthermore, the catalyst layer is commonly formed by supporting microparticles of a noble metal on a support, so that the support is required to have a surface structure being suitable for supporting the noble metal from a viewpoint of an effective utilization of the noble metal. Moreover, the electrode comprising the gas diffusion layer and the catalyst layer is preferable to be an integrally united composite body in view of the handling property. However, there is not yet known a composite body being excellent in the electronic conduction and permeability, having the surface structure suitable for supporting the noble metal microparticles and being excellent in the handling property.

It is, therefore, a first object of the invention to provide a composite body capable of being preferably used in an electrode for a solid polymer fuel cell and having excellent electronic conduction, permeability and handling property, a catalyst structural body using such a composite body, an electrode for a solid polymer fuel cell comprising such a catalyst structural body and a solid polymer fuel cell comprising such an electrode.

In the solid polymer fuel cell, a pair of electrodes are usually disposed so as to sandwich a solid polymer electrolyte membrane, while a fuel gas such as hydrogen or the like is contacted with a surface of one electrode and an oxygen-containing gas is contacted with a surface of the other electrode, whereby an electrochemical reaction is generated to take out electric energy between the electrodes. At this moment, a catalyst layer is disposed at a side of the electrode contacting with the polymer electrolyte membrane, so that the electrochemical reaction occurs at a three-phase interface of the polymer electrolyte membrane, the catalyst layer and the gas. Therefore, it is necessary to expand a reaction field of the electrochemical reaction in order to improve the power generation efficiency of the solid polymer fuel cell. In order to form the catalyst layer capable of expanding the reaction field of the electrochemical reaction, there is generally adopted a method wherein a paste or a slurry containing catalyst powder formed by supporting a noble metal catalyst such as platinum or the like on a granular carbon such as carbon black or the like is applied onto a conductive and porous support such as a carbon paper or the like. However, there is still a room for improvement in a point of the power generation efficiency even in the solid polymer fuel cell comprising the catalyst layer formed by such a method, so that it is demanded to develop a catalyst layer capable of further expanding the reaction field of the electrochemical reaction.

It is, therefore, a second object of the invention to provide an electrode for a solid polymer fuel cell provided with a catalyst layer capable of highly expanding the reaction field of the electrochemical reaction at the three-phase interface of the solid polymer electrolyte membrane, the catalyst layer and the gas, and a method for producing the same as well as a solid polymer fuel cell comprising such an electrode.

As mentioned above, although the solid polymer fuel cell has a characteristic that a power density is high, it is necessary to further lower the internal resistance of the cell in order to take out electric energy more efficiently. Furthermore, when the fuel cell is used in an instrument to be used at a high current, the fuel cell is required to have a characteristic that a voltage is hardly decreased even in a high current range.

It is, therefore, a third object of the invention to provide a solid polymer fuel cell being low in the internal resistance, wherein the voltage is preferable to be hardly lowered even in the high current range.

The inventors have made various studies in order to achieve the first object and discovered that a composite capable of being preferably used in an electrode for a solid polymer fuel cell and having excellent electronic conduction, permeability and further handling property can be obtained by integrally disposing a fibrous material or a bulky material composed mainly of carbon on a substrate composed mainly of carbon or metal to form a composite body and defining a permeability of the composite body within a specified range.

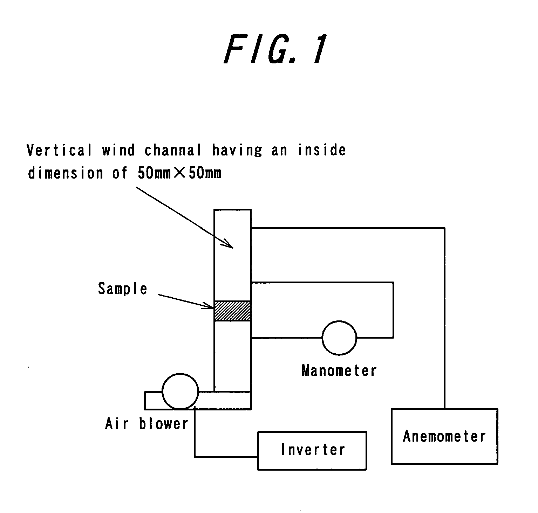

That is, the composite body according to the invention is a composite body formed by disposing a fibrous or bulky material composed mainly of carbon on a substrate composed mainly of carbon or a metal and is characterized in that a pressure loss of the composite body at a flow rate of 0.2 m/sec is less than 4000 Pa, preferably less than 3000 Pa, more preferably less than 2000 Pa. The pressure loss (pressure dissipation) used herein means a value obtained by using a vertical wind channel having an inside dimension of 50 mm × 50 mm as shown in FIG. 1 and measuring a pressure difference between top and bottom of a sample at a wind velocity of 0.2 m/sec with a manometer. Moreover, it is considered that a gap between the inside dimension of the wind channel and the sample is thoroughly sealed with a sealing material so as not to cause leakage.

As the substrate composed mainly of carbon is preferable a carbon paper, a carbon nonwoven fabric, a carbon cloth, a carbon net or a meshed carbon. The substrate composed mainly of the metal is preferable to be in the form of a woven fabric, a nonwoven fabric, a net, a mesh or a punching metal.

The composite body according to the invention is preferable to be formed by polymerizing a carbon-containing monomer on a substrate composed mainly of carbon or a metal to produce a fibrous or bulky material composed mainly of carbon on the substrate, and more preferable to be formed by polymerizing the carbon-containing monomer on the substrate composed mainly of carbon or the metal to produce the fibrous or bulky material composed mainly of carbon on the substrate and then firing the fibrous or bulky material, preferably firing it in a non-oxidizing atmosphere. The carbon-containing monomer is preferable to have an aromatic ring, more preferable to have a benzene ring or an aromatic heterocyclic ring, and particularly preferable to be at least one compound selected from the group consisting of aniline, pyrrole, thiophene and their derivatives. Moreover, as the polymerization is preferable an electrolytic oxidative-polymerization.

The catalyst structural body according to the invention is formed by supporting a noble metal, preferably microparticles of the noble metal on the fibrous or bulky material of the composite body. Also, the first electrode for the solid polymer fuel cell according to the invention comprises such a catalyst structural body. Furthermore, the first solid polymer fuel cell according to the invention is characterized by comprising the first electrode for the solid polymer fuel cell.

Moreover, the inventors have made various studies in order to achieve the above second object and discovered that an electrode for a solid polymer fuel cell provided with a catalyst layer capable of highly expanding a reaction field of an electrochemical reaction at the above-mentioned three-phase interface can be obtained by producing a fibril-shaped polymer on a porous support, firing the fibril-shaped polymer to form three-dimensionally continuous carbon fibers and supporting a noble metal on the three-dimensionally continuous carbon fibers by a sputtering method.

That is, the second electrode for the solid polymer fuel cell according to the invention is characterized in that a compound having an aromatic ring is oxidative-polymerized on a porous support to produce a fibril-shaped polymer on the porous support and the fibril-shaped polymer is fired preferably in a non-oxidizing atmosphere to produce three-dimensionally continuous carbon fibers and then a noble metal is supported on the three-dimensionally continuous carbon fibers by a sputtering method.

In a preferable embodiment of the second electrode for the solid polymer fuel cell according to the invention, the porous support is a carbon paper.

In another preferable embodiment of the second electrode for the solid polymer fuel cell according to the invention, the noble metal comprises at least Pt.

In the other preferable embodiment of the second electrode for the solid polymer fuel cell according to the invention, the compound having the aromatic ring is a compound having a benzene ring or an aromatic heterocyclic ring. The compound having the aromatic ring is more preferable to be at least one compound selected from the group consisting of aniline, pyrrole, thiophene and their derivatives. Also, the oxidative-polymerization of the compound having the aromatic ring is preferable to be conducted as an electrolytic oxidative-polymerization.

Also, the method for producing an electrode for a solid polymer fuel cell according to the invention is characterized by comprising the steps of:
(i) oxidative-polymerizing a compound having an aromatic ring on a porous support to produce a fibril-shaped polymer on the porous support;
(ii) firing the fibril-shaped polymer produced on the porous support, preferably firing it in a non-oxidizing atmosphere to produce three-dimensionally continuous carbon fibers; and
(iii) supporting a noble metal on the three-dimensionally continuous carbon fibers by a sputtering method.

Furthermore, the second solid polymer fuel cell according to the invention is characterized by comprising the second electrode for the solid polymer fuel cell.

The inventors have made various studies in order to achieve the above third object and discovered that an internal resistance of the solid polymer fuel cell is lowered by compressing at least a part of a solid polymer electrolyte membrane, a catalyst layer and a gas diffusion layer in the solid polymer fuel cell to define a compression ratio of a total thickness of the solid polymer electrolyte membrane, the catalyst layer and the gas diffusion layer within a specified range, and further a voltage of the fuel cell becomes hardly lowered even in a high current range by using three-dimensionally continuous carbon fibers as a support of the catalyst layer.

That is, the third solid polymer fuel cell according to the invention comprises a solid polymer electrolyte membrane, catalyst layers arranged on both sides of the solid polymer electrolyte membrane, gas diffusion layers arranged on the outer surfaces of the respective catalyst layers and separators arranged on the outer surfaces of the respective gas diffusion layers, and is characterized in that at least one of the solid polymer electrolyte membrane, the catalyst layers and the gas diffusion layers is compressed, and a ratio (B/A) of a total thickness B of the solid polymer electrolyte membrane, the catalyst layers and the diffusing layers after compression to a total thickness A thereof before compression is 60 to 90%.

In a preferable embodiment of the third solid polymer fuel cell according to the invention, the catalyst layer is formed by supporting a metal or a metal compound, preferably a noble metal on a conductive support, and the conductive support is three-dimensionally continuous carbon fibers produced by oxidative-polymerizing a compound having an aromatic ring to produce a fibril-shaped polymer and firing the fibril-shaped polymer, preferably firing it in a non-oxidizing atmosphere.

The noble metal is preferable to comprise at least Pt, and an electrolytic oxidative-polymerization is preferable as the oxidative-polymerization.

As the compound having the aromatic ring is preferable a compound having a benzene ring or an aromatic heterocyclic ring, and are more preferable aniline, pyrrole, thiophene and their derivatives.

According to the invention, there can be provided the composite body capable of preferably using in the electrode for the solid polymer fuel cell and being excellent in the electronic conductivity, the permeability and the handling property. Also, there can be provided the catalyst structural body using such a composite body, the electrode for the solid polymer fuel cell comprising such a catalyst structural body and the solid polymer fuel cell comprising such an electrode and having good cell characteristics.

Also, according to the invention, there can be provided the electrode for the solid polymer fuel cell comprising the porous support and the catalyst layer formed by supporting the noble metal on the three-dimensionally continuous carbon fibers by the sputtering method, in which the catalyst layer can highly expand the reaction field of the electrochemical reaction at the three-phase interface of the solid polymer electrolyte membrane, the catalyst layer and the gas and the method for producing the same, as well as the solid polymer fuel cell comprising such an electrode.

Furthermore, according to the invention, there can be provided the solid polymer fuel cell having a low internal resistance wherein at least a part of the solid polymer electrolyte membrane, the catalyst layers and the gas diffusion layers is compressed to define the compression ratio of the total thickness of the solid polymer electrolyte membrane, the catalyst layers and the diffusing layers within a specified range. Also, there can be provided the solid polymer fuel cell wherein the internal resistance is made low and the voltage even in the high current range is hardly lowered by using the three-dimensionally continuous carbon fibers are used as a support of the catalyst layer while compressing at least a part of the solid polymer electrolyte membrane, the catalyst layers and the gas diffusion layers.

### BRIEF DESCRIPTION OF THE DRAWINGS

FIG. 1 is a schematic view of an instrument for measuring a pressure loss (pressure dissipation).
FIG. 2 is a sectional view of an embodiment of the first and second solid polymer fuel cells according to the invention.
FIG. 3 is a sectional view of an embodiment of the third solid polymer fuel cell according to the invention.
FIG. 4 shows current-voltage curves of the solid polymer fuel cells of Examples 1 and 2 and Comparative Example 1.
FIG. 5 shows current-electric power curves of the solid polymer fuel cells of Examples 1 and 2 and Comparative Example 1.
FIG. 6 shows current-voltage curves of the solid polymer fuel cells of Example 3 and Comparative Example 2.
FIG. 7 shows current-output power curves of the solid polymer fuel cells of Example 3 and Comparative Example 2.
FIG. 8 shows current-voltage curves of the solid polymer fuel cells of Examples 4 and 5 and Comparative Examples 3 and 4.
FIG. 9 shows current-electric power curves of the solid polymer fuel cells of Examples 4 and 5 and Comparative Examples 3 and 4.

### BEST MODE FOR CARRYING OUT THE INVENTION

### <Composite body>

The composite body according to the invention is formed by disposing a fibrous material or a bulky material composed mainly of carbon on a substrate composed mainly of carbon or a metal and characterized in that a pressure loss of the composite body at a flow rate of 0.2 m/sec is less than 4000 Pa, preferably less than 3000 Pa and more preferably less than 2000 Pa. The composite body according to the invention can be preferably used in the electrode of the solid polymer fuel cell because the permeability is high. However, if the pressure loss of the composite body is not less than 4000 Pa, when it is used in the electrode of the solid polymer fuel cell, the mass transfer of a fuel gas or an oxidizer gas can not be conducted at a sufficient velocity and the output power of the fuel cell may be lowered particularly in the high current range.

The substrate of the composite body is not particularly limited as far as it is composed mainly of carbon or a metal, but is preferable to be excellent in the permeability. For example, when the main material of the substrate is carbon, as the substrate are preferably used materials being excellent in the permeability such as a carbon paper, a carbon nonwoven fabric, a carbon cloth, a carbon net, a meshed carbon and the like. On the other hand, when the main material of the substrate is a metal, the substrate is preferable to be in the form of a woven fabric, a nonwoven fabric, a net, a mesh or a punching metal. As the metal used in the substrate composed mainly of the metal are mentioned stainless steel, titanium, nickel, titanium plated with platinum or the like, and so on.

The composite body of the invention is preferable to be formed by polymerizing a carbon-containing monomer on the substrate composed mainly of carbon or the metal to produce a fibrous or bulky material composed mainly of carbon on the substrate. From a viewpoint of electronic conduction, the composite body of the invention is more preferable to be formed by polymerizing the carbon-containing monomer on the substrate composed mainly of carbon or the metal to produce the fibrous or bulky material composed mainly of carbon on the substrate and firing the fibrous or bulky material, preferably firing it in a non-oxidizing atmosphere. The carbon-containing monomer is preferable to have an aromatic ring in its molecular structure and more preferable to have a benzene ring or an aromatic heterocyclic ring. As the monomer having the benzene ring are preferable aniline and its derivatives, and as the monomer having the aromatic heterocyclic ring are preferable pyrrole, thiophene and their derivatives. These carbon-containing monomers may be used alone or in a combination of two or more.

The fibrous material obtained by polymerizing the carbon-containing monomer, i.e. a fibril-shaped polymer has a diameter of 30 to few hundreds nm, preferably 40 to 500 nm and a length of 0.5 to 100000 µm, preferably 1 to 10000 µm. On the other hand, the bulky material obtained by polymerizing the carbon-containing monomer, i.e., a bulky polymer has a particle size of 10 to 2000 nm, preferably 15 to 1000 nm.

As the polymerization method is preferable an oxidative-polymerization method, and as the oxidative-polymerization method are mentioned an electrolytic oxidative-polymerization method and a chemical oxidative-polymerization method, but the electrolytic oxidative-polymerization method is particularly preferable. In the polymerization, an acid is preferable to be mixed together with the carbon-containing monomer as a starting material. In this case, a negative ion of the acid is incorporated into the synthesized fibril-shaped polymer or bulky polymer as a dopant to provide a fibril-shaped polymer or bulky polymer having an excellent electric conduction, and the electric conduction of the composite body can be further improved by firing such a polymer, preferably firing it in a non-oxidizing atmosphere. Either of the fibril-shaped polymer and the bulky polymer can be selectively produced by properly selecting a kind of an acid or the like used in the electrolytic oxidative-polymerization method, and the bulky polymer is mainly obtained in the chemical oxidative-polymerization method.

This point is further described in detail. For example, when aniline is used as a starting polymerization material, a polyaniline obtained by oxidative-polymerizing the aniline at a state of mixing with HBF₄ becomes usually at a state of mixing four kinds of polyanilines represented by the following formulae (A)-(D): 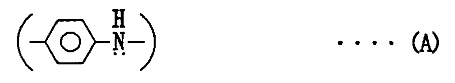 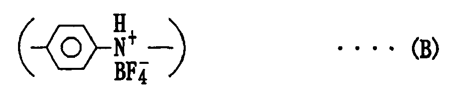 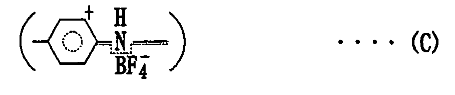 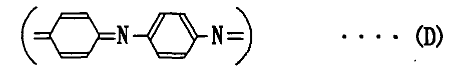 that is, a mixed state of a benzonoid=amine state (formula A), a benzonoid=ammonium state (formual B), a dope=semiquinone radical state (formula C) and a quinoid=diimine state (formula D). In this case, the mixing ratio of these states is not particularly limited, but the residual carbon ratio and electric conductivity of the finally obtained fibrous material (i.e. carbon fibers) or bulky material (i.e. granular carbon) through the firing become higher in the case of containing a greater part of the dope=semiquinone radical state (formula C) as compared with the case of containing a greater part of the quinoid=diimine state (formula D). Therefore, in order to obtain polyaniline containing a greater part of the dope=semiquinone radical state (formula C), the acid is preferable to be mixed in the polymerization. Moreover, the acid to be mixed in the polymerization is not limited to HBF₄, but various acids can be used. In addition to HBF₄ can be exemplified H₂SO₄, HCl, HClO₄ and the like. In this case, the concentration of the acid is preferable to be within a range of 0.1 to 3 mol/L, and more preferable within a range of 0.5 to 2.5 mol/L.

The content (doping level) of the dope=semiquinone radical state (formula C) can be adjusted properly. By adjusting such a content (doping level) can be controlled the residual carbon ratio and electric conductivity of the resulting carbon fibers or the granular carbon. As the doping level is made higher, the residual carbon ratio and electric conductivity of the resulting carbon fibers or the granular carbon become high. Moreover, the content (doping level) of the dope=semiquinone radical state (formula C) is not particularly limited, but is preferable to be usually within a range of 0.01-50%.

In case of obtaining the fibril-shaped polymer through the electrolytic oxidative-polymerization, a working electrode and a counter electrode are immersed in a solution containing the carbon-containing monomer, and then a voltage of not less than an oxidation potential of the carbon-containing monomer is applied between both the electrodes or a current capable of ensuring a voltage enough to polymerize the carbon-containing monomer is flowed, whereby the fibril-shaped polymer is formed on the working electrode. At this moment, the substrate of the above composite body can be used as the working electrode, and a plate, a porous support or the like made from a good conductive substance such as stainless steel, platinum, carbon or the like can be used as the counter electrode. As one example of the method of synthesizing the fibril-shaped polymer through the electrolytic oxidative-polymerization, there is exemplified a method wherein the working electrode (substrate) and the counter electrode are immersed in an electrolyte solution containing an acid such as H₂SO₄, HBF₄ or the like and the carbon-containing monomer and then a current of 0.1 to 1000 mA/cm², preferably 0.2 to 100 mA/cm² is flowed between both the electrodes to polymerization-precipitate a fibril-shaped polymer on the working electrode, or the like. In this case, the concentration of the carbon-containing monomer in the electrolyte solution is preferably within a range of 0.05 to 3 mol/L, more preferably within a range of 0.25 to 1.5 mol/L. To the electrolyte solution may be properly added a soluble salt or the like for adjusting pH in addition to the above components.

In the chemical oxidative-polymerization method, an oxidizer having an oxidation-reduction potential approximately equal to a polymerization potential of the carbon-containing monomer, e.g., (NH₄)₂S₂O₈, MnO₂, PbO₂, FeCl₃ or the like is charged into the solution containing the carbon-containing monomer, whereby the bulky polymer is formed by polymerization. As one example of the method of synthesizing a polymer through the chemical oxidative-polymerization, there is exemplified a method wherein 0.5 mol/L of ammonium persulfate [(NH₄)₂S₂O₈] is added as an oxidizer to a solution containing 1 mol/L of H₂SO₄ and 0.4 mol/L of carbon-containing monomer and then the carbon-containing monomer is oxidative-polymerized at an oxidation-reduction potential (versus a standard electrode) of ammonium persulfate of 2.0 V to precipitate a polymer, or the like. In this case, the concentration of the carbon-containing monomer in the solution is preferably within a range of 0.05 to 3 mol/L, more preferably within a range of 0.25 to 1.5 mol/L. To the solution may be properly added a soluble salt or the like for adjusting pH in addition to the above components.

As mentioned above, the electric conductivity and residual carbon ratio of the carbon fibers or the granular carbon obtained after the firing can be controlled by adjusting the doping level of the fibril-shaped polymer or the bulky polymer. The method of adjusting the doping level is not particularly limited as long as the resulting fibril-shaped polymer or the bulky polymer is subjected to a reduction treatment through any process. As a concrete example, there are mentioned a method of immersing in an aqueous solution of ammonia or an aqueous solution of hydrazine, a method of electrochemically applying a reduction current, and the like. The control of the dopant quantity included in the fibril-shaped polymer or the bulky polymer can be carried out by the reduction level, in which the dopant quantity in the fibril-shaped polymer or the bulky polymer is decreased by the reduction treatment. Also, the doping level may be adjusted to a certain extent by controlling the acid concentration in the polymerization, but it is difficult to obtain various samples having largely different doping levels, so that the above reduction method is preferably used. Moreover, the dopant having the thus adjusted content is kept in the carbon fibers or the granular carbon obtained by controlling the firing conditions even after the firing as mentioned later, whereby the electric conductivity and residual carbon ratio of the carbon fibers or the granular carbon are controlled.

The fibril-shaped polymer or the bulky polymer obtained as mentioned above is washed with water or a solvent such as an organic solvent or the like, dried and carbonized by firing, preferably firing in a non-oxidizing atmosphere to obtain carbon fibers or granular carbon. The drying method is not particularly limited, but can include air-drying, vacuum drying and a method using a fluidized bed drying device, flash drier, spray drier or the like. Also, the firing conditions are not particularly limited, but may be properly set so as to provide an optimum electric conductivity. Particularly, in case of requiring the high electric conductivity, it is preferable that the firing temperature is 500 to 3000°C, preferably 600 to 2800°C and the time is 0.5 to 6 hours. As the non-oxidizing atmosphere may be mentioned an inert gas atmosphere such as a nitrogen atmosphere, an argon atmosphere, a helium atmosphere or the like, and in some cases may be used a hydrogen atmosphere. The non-oxidizing atmosphere may contain a small amount of oxygen as far as the fibril-shaped polymer or the bulky polymer is completely disappeared.

The carbon fibers have a diameter of 30 to few hundreds nm, preferably 40 to 500 nm, a length of 0.5 to 100000 µm, preferably 1 to 10000 µm, and a surface resistance of 10⁶ to 10⁻² Ω, preferably 10⁴ to 10⁻² Ω. Also, the granular carbon has a particle size of 10 to 2000 nm, preferably 15 to 1000 nm, and a surface resistance of 10⁶ to 10⁻² Ω, preferably 10⁴ to 10⁻² Ω. Moreover, the carbon fibers and the granular carbon have a residual carbon ratio of 95 to 30%, preferably 90 to 40%. The fibril-shaped carbon fibers obtained as mentioned above are higher in the electric conduction as compared with the granular carbon because the carbon as a whole has a three-dimensionally continuous structure.

### <Catalyst structural body>

The catalyst structural body according to the invention is formed by supporting a noble metal, preferably microparticles of the noble metal on the fibrous or bulky material of the above-mentioned composite body. The catalyst structural body can be used as a catalyst for various chemical reactions such as hydrogenation reaction and the like in addition to the electrode for the solid polymer fuel cell. As the noble metal to be supported on the composite body is particularly preferable Pt. In the invention, Pt may be used alone or may be used as an alloy with another metal such as Ru or the like. By using Pt as a noble metal and using the catalyst structural body of the invention as an electrode for a solid polymer fuel cell can be oxidized hydrogen in a high efficiency even at a low temperature of not higher than 100°C. Also, by using the alloy of Pt with Ru or the like can be prevented the poisoning of Pt with CO to prevent the lowering of the catalyst activity. Moreover, the particle size of the noble metal microparticles supported on the fibrous or bulky material is preferably within a range of 0.5 to 100 nm, more preferably within a range of 1 to 50 nm. The noble metal may be in the form of fabric, wire, or thin film. The supporting ratio of the noble metal is preferably within a range of 0.05 to 5 g per 1 g of the fibrous or bulky material. The method for supporting the noble metal on the fibrous or bulky material is not particularly limited, but includes, for example, impregnation method, electroplating method (electrolytic reduction method), electroless plating method, sputtering method and the like.

### <First electrode for solid polymer fuel cell>

The first electrode for the solid polymer fuel cell according to the invention comprises the aforementioned catalyst structural body, or is formed by supporting a noble metal on the fibrous or bulky material of the above-mentioned composite body and comprises a gas diffusion layer and a catalyst layer. In the first electrode for the solid polymer fuel cell according to the invention, the substrate of the composite body corresponds to the gas diffusion layer, and the noble metal supported fibrous or bulky material corresponds to the catalyst layer. Since the first electrode for the solid polymer fuel cell according to the invention uses the above-mentioned composite body being excellent in the permeability and the electronic conduction, the mass transfer of the fuel gas or the oxidizer gas is smoothly conducted on the electrode and the voltage drop at the electrode is small.

It is preferable to impregnate a polymer electrolyte into the catalyst layer. As the polymer electrolyte can be used an ion-conductive polymer. As the ion-conductive polymer may be mentioned a polymer having an ion exchanging group such as sulfonic acid, carboxylic acid, phosphonic acid, phosphonous acid or the like, in which the polymer may contain or may not contain fluorine. As the ion-conductive polymer are concretely preferable perfluorocarbon sulfonic acid based polymers and the like such as Naphion (registered trade mark) and so on. The amount of polymer electrolyte impregnated is preferable to be within a range of 10 to 500 parts by mass per 100 parts by mass of the fibrous or bulky material of the catalyst layer. The thickness of the catalyst layer is not particularly limited, but is preferably within a range of 0.1 to 100 µm. The amount of the noble metal supported in the catalyst layer is determined by the supporting ratio and the thickness of the catalyst layer, and is preferably within a range of 0.001 to 0.8 mg/cm².

The gas diffusion layer is a layer for feeding a hydrogen gas or an oxidizer gas such as oxygen, air or the like to the catalyst layer to give and receive the resulting electrons, and plays a role as a layer for diffusing gas and a current collector. As a material used in the gas diffusion layer is mentioned the material used in the substrate of the above-mentioned composite body.

### <First solid polymer fuel cell>

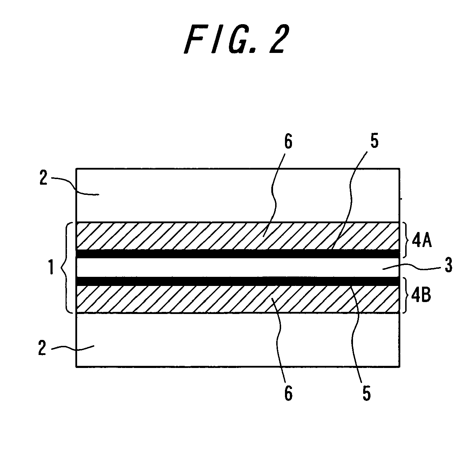

The first solid polymer fuel cell according to the invention is characterized by comprising the first electrode for the solid polymer fuel cell. The first solid polymer fuel cell according to the invention will be described in detail below with reference to FIG. 2. The solid polymer fuel cell shown in FIG. 2 comprises a membrane electrode assembly (MEA) 1 and separators 2 disposed on both sides thereof. The membrane electrode assembly (MEA) 1 is composed of a solid polymer electrolyte membrane 3 and a fuel electrode 4A and an air electrode 4B disposed on both sides thereof. In the fuel electrode 4A, a reaction represented by 2H₂ → 4H⁺ + 4e⁻ occurs, and the generated H⁺ is transferred to the air electrode 4B through the solid polymer electrolyte membrane 3 and the generated e⁻ is taken outside to be a current. On the other hand, in the air electrode 4B, a reaction represented by O₂ + 4H⁺ + 4e⁻ → 2H₂O occurs, and water is generated. At least one of the fuel electrode 4A and the air electrode 4B is the above-mentioned first electrode of the solid polymer fuel cell according to the invention. Moreover, the fuel electrode 4A and the air electrode 4B comprise a catalyst layer 5 and a gas diffusion layer 6, respectively, in which the catalyst layer 5 is arranged so as to contact with the solid polymer electrolyte membrane 3.

In the first solid polymer fuel cell according to the invention, since the first electrode for the solid polymer fuel cell according to the invention formed by supporting the noble metal microparticles on the composite body being excellent in the electronic conduction, the permeability and the handling characteristic is used in at least one of the fuel electrode 4A and the air electrode 4B, the mass transfer of the fuel gas or the oxidizer gas is smoothly conducted at the electrode and the output power of the fuel cell can be prevented from lowering. Particularly, the first solid polymer fuel cell according to the invention develops a remarkable effect of preventing the output power of the fuel cell from lowering in such a high current range that it is necessary to conduct the mass transfer of the fuel gas or the oxidizer gas at the electrode more smoothly. Also, since the electrode is high in the electronic conduction, electric energy can be taken out effectively without increasing the internal resistance of the fuel cell.

As the solid polymer electrolyte membrane 3 can be used an ion-conductive polymer, and as the ion-conductive polymer can be used ones mentioned as the polymer electrolyte which may be impregnated into the catalyst layer. As the separator 2 can be used a normal separator wherein flow channels (not shown) for fuel, air, generated water or the like are formed on its surface.

### <Second electrode for solid polymer fuel cell and the method for producing the same>

The second electrode for the solid polymer fuel cell according to the invention is characterized in that a compound having an aromatic ring is oxidative-polymerized on a porous support to produce a fibril-shaped polymer on the porous support and the fibril-shaped polymer is fired to produce three-dimensionally continuous carbon fibers and then a noble metal is supported on the three-dimensionally continuous carbon fibers by a sputtering method. Also, the preferable method for producing the electrode for the solid polymer fuel cell according to the invention is characterized by comprising the steps of (i) oxidative-polymerizing a compound having an aromatic ring on a porous support to produce a fibril-shaped polymer on the porous support; (ii) firing the fibril-shaped polymer produced on the porous support to produce three-dimensionally continuous carbon fibers; and (iii) supporting a noble metal on the three-dimensionally continuous carbon fibers by a sputtering method.

The second electrode for the solid polymer fuel cell according to the invention comprises the porous support and the catalyst layer formed by supporting the noble metal on the three-dimensionally continuous carbon fibers by the sputtering method, and can be used as a fuel electrode or as an air electrode (oxygen electrode). Since the three-dimensionally continuous carbon fibers formed on the porous support have a very large surface area and the noble metal is supported on the three-dimensionally continuous carbon fibers having such a large surface area in the second electrode for the solid polymer fuel cell according to the invention, the reaction field of the electrochemical reaction at a three-phase interface of the solid polymer electrolyte membrane, the catalyst layer and the gas is highly expanded, and the utilization efficiency of the catalyst is high and the catalytic activity of the catalyst layer is high.

The porous support in the second electrode for the solid polymer fuel cell according to the invention plays a role for feeding a fuel gas such as hydrogen gas or the like or an oxygen-containing gas such as oxygen, air or the like to the catalyst layer and as a current collector for giving and receiving the resulting electrons. The material used for the porous support is porous and has an electric conduction, and includes a carbon paper, a porous carbon cloth and the like.

On the other hand, the three-dimensionally continuous carbon fibers used in the catalyst layer of the second electrode for the solid polymer fuel cell according to the invention is obtained by oxidative-polymerizing a compound having an aromatic ring to produce a fibril-shaped polymer and then firing the fibril-shaped polymer, preferably firing it in a non-oxidizing atmosphere. As the compound having the aromatic ring are mentioned compounds having a benzene ring or an aromatic heterocyclic ring. As the compound having the benzene ring are preferable aniline and its derivatives, and as the compound having the aromatic heterocyclic ring are preferable pyrrole, thiophene and their derivatives. These compounds having the aromatic ring may be used alone or in a combination of two or more.

The fibril-shaped polymer as a starting material for the three-dimensionally continuous carbon fibers used in the catalyst layer of the second electrode for the solid polymer fuel cell according to the invention is similar to the fibril-shaped polymer in the paragraph of the above-mentioned composite body except that the compound having the aromatic ring is selected as the carbon-containing monomer, and has a diameter of 30 to few hundreds nm, preferably 40 to 500 nm and a length of 0.5 to 100000 µm, preferably 1 to 10000 µm.

As the oxidative-polymerization method is preferable an electrolytic oxidative-polymerization method. In the oxidative-polymerization, an acid is preferable to be mixed together with the compound having the aromatic ring as a starting material. In this case, a negative ion of the acid is incorporated into the synthesized fibril-shaped polymer as a dopant to provide a fibril-shaped polymer having an excellent electric conduction, and finally the electric conduction of the carbon fibers can be further improved by using such a fibril-shaped polymer. This point is as described above, for example, concerning a case wherein the aniline is oxidative-polymerized at the state of mixing with HBF₄ to produce the polyaniline in the paragraph of the composite body of the invention. Moreover, the fibril-shaped polymer can be produced according to the description in the paragraph of the composite body by using the compound having the aromatic ring as the carbon-containing monomer and using the porous support as the substrate and preferably conducting the oxidative-polymerization.

The three-dimensionally continuous carbon fibers used in the catalyst layer of the second electrode for the solid polymer fuel cell according to the invention are similar to the carbon fibers described in the paragraph of the above-mentioned composite body except that the compound having the aromatic ring is selected as the carbon-containing monomer, and have a diameter of 30 to few hundreds nm, preferably 40 to 500 nm, a length of 0.5 to 100000 µm, preferably 1 to 10000 µm and a surface resistance of 10⁶ to 10⁻² Ω, preferably 10⁴ to 10⁻² Ω. Moreover, the carbon fibers have a residual carbon ratio of 95 to 30%, preferably 90 to 40%. The carbon fibers are high in the electric conduction as compared with the granular carbon because the carbon as a whole has a three-dimensionally continuous structure. The carbon fibers are obtained by washing the fibril-shaped polymer with water or a solvent such as an organic solvent or the like, drying and firing, preferably firing it in a non-oxidizing atmosphere to conduct carbonization according to the description in the paragraph of the composite body.

As the noble metal used in the catalyst layer of the second electrode for the solid polymer fuel cell according to the invention is particularly preferable Pt. In the invention, Pt may be used alone or may be used as an alloy with another metal such as Ru or the like. By using Pt as a noble metal can be oxidized hydrogen in a high efficiency even at a low temperature of not higher than 100°C. By using the alloy of Pt with Ru or the like can be prevented the poisoning of Pt with CO to prevent the lowering of the catalyst activity. Moreover, the particle size of the noble metal supported on the carbon fibers is preferably within a range of 0.5 to 20 nm, and the supporting ratio of the noble metal is preferably within a range of 0.05 to 5 g per 1 g of the carbon fibers.

In the second electrode for the solid polymer fuel cell according to the invention, supporting the noble metal on the three-dimensionally continuous carbon fibers is conducted by the sputtering method. The large surface area of the three-dimensionally continuous carbon fibers can be effectively utilized by selectively supporting the noble metal on the three-dimensionally continuous carbon fibers according to the sputtering method. Also, when co-sputtering is conducted, several kinds of metals can be supported simultaneously or metal alloy can be supported, so that various functions (such as improvement against poisoning due to carbon monoxide, improvement against poisoning due to sulfur, improvement in an efficiency of oxygen reduction or the like) can be given to the catalyst. Moreover, in the catalyst layer formed by supporting the noble metal on the three-dimensionally continuous carbon fibers by the sputtering method, a part of the noble metal supported may be dissolved to further improve the surface area of the catalyst layer.

A polymer electrolyte may be impregnated into the catalyst layer. As the polymer electrolyte can be used an ion-conductive polymer. As the ion-conductive polymer may be mentioned the polymers mentioned in the paragraph of the first electrode for the solid polymer fuel cell, and are concretely preferable perfluorocarbon sulfonic acid based polymers and the like such as Naphion (registered trade mark) and so on. The amount of the polymer electrolyte impregnated is preferable to be within a range of 10 to 500 parts by mass per 100 parts by mass of the catalyst layer. The thickness of the catalyst layer is not particularly limited, but is preferably within a range of 0.1 to 100 µm. The amount of the noble metal supported in the catalyst layer is determined by the supporting ratio and the thickness of the catalyst layer, and is preferably within a range of 0.001 to 0.8 mg/cm².

### <Second solid polymer fuel cell>

The second solid polymer fuel cell according to the invention is characterized by comprising the second electrode for the solid polymer fuel cell. The second solid polymer fuel cell according to the invention is similar to the above-mentioned first solid polymer fuel cell except that the electrode is different, in which the porous support of the second electrode for the solid polymer fuel cell corresponds to the diffusion layer 6. In the second solid polymer fuel cell according to the invention, the catalyst layer 5 is formed by supporting the noble metal on the three-dimensionally continuous carbon fibers by the sputtering method and the surface area of the three-dimensionally continuous carbon fiber is very large, so that the reaction field of the electrochemical reaction at a three-phase interface of the solid polymer electrolyte membrane 3, the catalyst layer 5 and the gas is very large, and hence the power generation efficiency of the solid polymer fuel cell is highly improved.

### <Third solid polymer fuel cell>

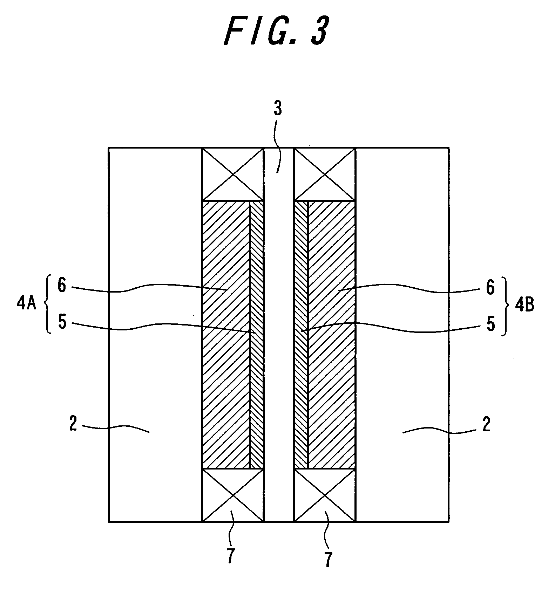

The third solid polymer fuel cell according to the invention will be described in detail with reference to FIG. 3. The solid polymer fuel cell shown in FIG. 3 comprises a solid polymer electrolyte membrane 3, catalyst layers 5 disposed on both sides of the solid polymer electrolyte membrane 3, gas diffusion layers 6 disposed on outsides of the respective catalyst layers 5, separators 2 disposed on outsides of the respective gas diffusion layers 6 and spacers 7 disposed between the separator 2 and the solid polymer electrolyte membrane 3 and encompassing the catalyst layer 5 and the gas diffusion layer 6. A set of the catalyst layer 5 and the gas diffusion layer 6 located at each side of the solid polymer electrolyte membrane 3 constitute a fuel electrode 4A and an air electrode 4B, respectively. In the fuel electrode 4A, a reaction represented by 2H₂ → 4H⁺ + 4e⁻ occurs, and the generated H⁺ is transferred to the air electrode 4B through the solid polymer electrolyte membrane 3 and the generated e⁻ is taken outside to be a current. Moreover, in the air electrode 4B, a reaction represented by O₂ + 4H⁺ + 4e⁻ → 2H₂O occurs and water is generated.

In the third solid polymer fuel cell according to the invention, at least one of the solid polymer electrolyte membrane 3, the catalyst layers 5 and the gas diffusion layers 6 is compressed, and a ratio (B/A) of a total thickness B of the solid polymer electrolyte membrane 3, the catalyst layers 5 and the gas diffusion layers 6 after compression to a total thickness A thereof before compression is 60 to 90%. The internal resistance of the solid polymer fuel cell can be decreased by compressing at least one of the solid polymer electrolyte membrane 3, the catalyst layers 5 and the gas diffusion layers 6. However, when the ratio (B/A) of the total thickness after compression B to the total thickness before compression A is less than 60%, diffusions of fuel and air fed from the separator 2, unused fuel and air discharged to the separator 2 and generated water are deteriorated and the output power of the fuel cell is lowered, while when it exceeds 90%, the effect by the compression is insufficient and the effects of decreasing the internal resistance and preventing the lowering of voltage in the high current range are insufficient.

The method for compressing the solid polymer electrolyte membrane 3, the catalyst layers 5 and the gas diffusion layers 6 is not particularly limited, but includes, for example, a method comprising the steps of assembling a cell from the solid polymer electrolyte membrane 3, the catalyst layers 5, the gas diffusion layers 6, the separators 2 and the spacers 7 and then evenly applying a load to the solid polymer electrolyte membrane 3, the catalyst layers 5 and the gas diffusion layers 6 by screwing or the like.

As the solid polymer electrolyte membrane 3 is usually used an ion-conductive polymer. As the ion-conductive polymer may be mentioned a polymer having an ion exchanging group such as sulfonic acid, carboxylic acid, phosphonic acid, phosphonous acid or the like, in which the polymer may contain or may not contain fluorine. As the ion-conductive polymer are preferable perfluorocarbon sulfonic acid based polymers and the like such as Naphion (registered trade mark) and so on.

The catalyst layer 5 is not particularly limited, but is commonly formed by supporting a metal or a metal compound on a conductive support. As the conductive support used in the catalyst layer 5 are preferable the three-dimensionally continuous carbon fibers described in the paragraph of the second electrode for the solid polymer fuel cell according to the invention. The lowering of the voltage of the solid polymer fuel cell in a high current range can be suppressed by using the three-dimensionally continuous carbon fibers as the conductive support of the catalyst layer 5.

The metal or the metal compound used in the catalyst layer 5 is not particularly limited as far as it has a catalytic effect, but is preferable to be a noble metal, particularly Pt. In the invention, Pt may be used alone or may be used as an alloy with another metal such as Ru or the like. By using Pt as a noble metal can be oxidized hydrogen in a high efficiency even at a low temperature of not higher than 100°C. By using the alloy of Pt with Ru or the like can be prevented the poisoning of Pt with CO to prevent the lowering of the catalyst activity. The form of the metal or the metal compound supported on the conductive support is not particularly limited, but is preferable to be in the form of microparticles, and its particle size is not particularly limited, but is preferably within a range of 0.5 nm to 1 µm, more preferably 0.5 nm to 200 nm, further preferably 0.5 nm to 20 nm. The supporting ratio of the metal or the metal compound is preferably within a range of 0.05 to 5 g per 1 g of the conductive support. The method for supporting the metal or the metal compound on the conductive support is not particularly limited, but includes, for example, impregnation method, electroplating method (electrolytic reduction method), electroless plating method, sputtering method and the like.

A polymer electrolyte is preferably impregnated into the catalyst layer 5. As the polymer electrolyte can be used an ion-conductive polymer. As the ion-conductive polymer may be mentioned the polymers mentioned in the paragraph of the first electrode for the solid polymer fuel cell, and are concretely preferable perfluorocarbon sulfonic acid based polymers and the like such as Naphion (registered trade mark) and so on. The amount of polymer electrolyte impregnated is preferable to be within a range of 10 to 500 parts by mass per 100 parts by mass of the conductive support of the catalyst layer. The thickness of the catalyst layer 5 is not particularly limited, but is preferably within a range of 0.1 to 100 µm. The amount of the metal or the metal compound supported in the catalyst layer 5 is determined by the supporting ratio and the thickness of the catalyst layer, and is preferably within a range of 0.001 to 0.8 mg/cm².

The gas diffusion layer 6 is a layer for feeding a hydrogen gas or an oxidizer gas such as oxygen, air or the like to the catalyst layer 5 to give and receive the resulting electrons, and plays a role as a layer for diffusing gas and a current collector. The material used in the gas diffusion layer 6 is not particularly limited as far as it is porous and electronically conductive, but includes a porous carbon cloth, a carbon paper and the like.

As the separator 2 can be used a normal separator wherein a flow channels (not shown) for fuel, air, generated water or the like are formed on its surface. Since plural cells are commonly stacked for use in the fuel cell, a separator having flow channels formed on both surfaces thereof is preferable. As the spacer 7 is preferably used an elastomer such as a rubber or the like. When the elastomer is used in the spacer 7, the compression ratio of the catalyst layers 5 and the gas diffusion layers 6 can be easily adjusted.

### <EXAMPLES>

The following examples are given in illustration of the invention and are not intended as limitations thereof.

### (Example 1)

A carbon paper (made by Toray Industries, Inc. thickness: 190 µm) as a working electrode is placed in an acidic aqueous solution containing 0.5 mol/L of aniline monomer and 1.0 mol/L of HBF₄, and a platinum plate is used as a counter electrode, and the electrolytic polymerization is carried out at room temperature and a constant current of 20 mA/cm² for 2 minutes to electrodeposit polyaniline on the carbon paper. The resulting polyaniline is washed with an ion exchanged water and dried under vacuum for 24 hours. As observed through SEM, it is confirmed that fibril-shaped polyaniline having a diameter of 50 to 100 nm is formed on a side of the carbon paper facing to the platinum plate. Moreover, as the pressure loss of a composite body having a size of 50 mm × 50 mm and comprising the carbon paper and the fibril-shaped polyaniline is measured by an apparatus of FIG. 1, the pressure loss at a flow rate of 0.2 m/sec is 920 Pa.

Then, the polyaniline is subjected together with the carbon paper to a firing treatment by heating up to 950°C at a temperature rising rate of 3°C/min in an Ar atmosphere and then keeping at 950°C for 1 hour. As the fired product is observed through SEM, it is confirmed that fibril-shaped three-dimensionally continuous carbon fibers having a diameter of 40 to 100 nm are formed on the carbon paper. Moreover, the resulting carbon fibers have a residual carbon ratio of 45% and a surface resistance of 1.0 Ω (measured through Loresta IP or Hiresta IP made by Mitsubishi Yuka Co., Ltd.). Furthermore, the resulting composite comprising the carbon paper and the carbon fibers has a pressure loss of 870 Pa at a flow rate of 0.2 m/sec.

Then, the carbon paper having the carbon fibers on its surface is placed as a working electrode in an aqueous solution of 3% by mass of chloroplatinic acid, and a platinum plate is used as a counter electrode, and the electroplating (electrolytic reduction) is carried out at a room temperature and a constant current of 30 mA/cm² for 15 seconds to precipitate platinum on the carbon fibers. The amount of platinum supported is 0.15 mg/cm². In this case, the working electrode and the platinum plate are arranged so that a face of the carbon fibers adhered to the carbon paper is faced to the platinum plate.

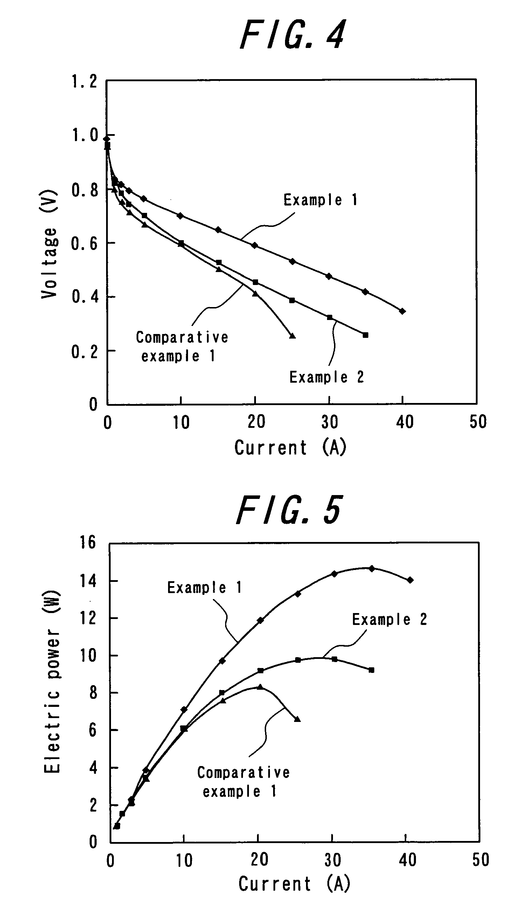

A solution of 5% by mass of Naphion (registered trade mark) is applied to the platinum-supported carbon fibers formed on the carbon paper and dried to form a carbon paper provided with a catalyst layer (electrode). Then, the carbon paper provided with the catalyst layer is arranged so as to contact the catalyst layer with each face of a solid polymer electrolyte membrane made of Naphion (registered trade mark) (thickness: 125 µm), which are hot-pressed to prepare a membrane electrode assembly (MEA). In the thus obtained membrane electrode assembly, the thickness of the catalyst layer is about 5 µm and a ratio of platinum-supported carbon fibers/Naphion is 2/1 (by weight). The membrane electrode assembly is incorporated into a test cell made by Electro Chemical Co., Ltd. (EFC25-01SP) to prepare a solid polymer fuel cell. Then, the current-voltage curve and the current-output power curve of the resulting fuel cell are measured under conditions that H₂ flow rate is 300 cm³/min, O₂ flow rate is 300 cm³/min, cell temperature is 80°C and humidity temperature is 80°C. The results are shown in FIGS. 4 and 5.

### (Comparative Example 1)

A fuel cell is made in the same manner as in Example 1 except for the use of a MEA made by Electro Chemical Co., Ltd. (solid polymer electrolyte membrane: Naphion film, film thickness: 130 µm, support: granular carbon, platinum-supporting ratio: 20% by mass, platinum-supporting amount: 1 mg/cm², thickness of gas diffusion layer: 190 µm, thickness of catalyst layer: 50 µm), and the current-voltage curve and the current-output power curve thereof are measured. Moreover, the pressure losses of the gas diffusion layer and the granular carbon portion in the MEA are measured, but the measurement in the apparatus of FIG. 1 is impossible because the pressure difference at a flow rate of 0.2 m/sec is very large. As the measurement is carried out at a slower flow rate and then a pressure difference at a flow rate of 0.2 m/sec is extrapolated from the measured result, the pressure loss is presumed to be not less than 5000 Pa. The results are shown in FIGS. 4 and 5.

### (Example 2)

A carbon paper (made by Toray Industries, Inc. thickness: 190 µm) as a working electrode is placed in an acidic aqueous solution containing 0.5 mol/L of aniline monomer and 1.6 mol/L of H₂SO₄, and a platinum plate is used as a counter electrode, and the electrolytic polymerization is carried out at room temperature and a constant current of 15 mA/cm² for 4 minutes to electrodeposit polyaniline on the carbon paper. The resulting polyaniline is washed with an ion exchanged water and dried under vacuum for 24 hours. As observed through SEM, it is confirmed that bulky polyaniline having a particle size of 20 to 100 nm is formed on a side of the carbon paper facing to the platinum plate. Moreover, as the pressure loss of a composite body comprising the carbon paper and the bulky polyaniline is measured in the same manner as mentioned above, the pressure loss at a flow rate of 0.2 m/sec is 1200 Pa.

Then, the bulky polyaniline is subjected together with the carbon paper to a firing treatment by heating up to 900°C at a temperature rising rate of 3°C/min in an Ar atmosphere and then keeping at 900°C for 1 hour. As the fired product is observed through SEM, it is confirmed that a bulky material having a particle size of 20 to 100 nm is obtained. Moreover, the residual carbon ratio calculated from gravimetric determination is 41% and the surface resistance is 3.0 Ω. The pressure loss measured as mentioned above is 1100 Pa.

Then, the carbon paper having the bulky carbon on its surface is placed as a working electrode in an aqueous solution of 1% by mass of chloroplatinic acid, and a platinum plate is used as a counter electrode, and the electroplating is carried out at a room temperature and a constant current of 20 mA/cm² for 20 seconds to precipitate platinum on the bulky carbon. The amount of platinum supported is 0.12 mg/cm².

A solution of 5% by mass of Naphion (registered trade mark) is applied to the platinum-supported bulky carbon formed on the carbon paper and dried to form a carbon paper provided with a catalyst layer (electrode). Then, the carbon paper provided with the catalyst layer is arranged so as to contact the catalyst layer with each face of a solid polymer electrolyte membrane made of Naphion (registered trade mark) (film thickness: 125 µm), which are hot-pressed to prepare a membrane electrode assembly (MEA). In the thus obtained membrane electrode assembly, the thickness of the catalyst layer is about 5 µm and a ratio of platinum-supported bulky carbon/Naphion is 2/1 (by weight). The membrane electrode assembly is used to prepare a solid polymer fuel cell in the same manner as in Example 1, and the current-voltage curve and the current-output power curve thereof are measured. The results are shown in FIGS. 4 and 5.

The pressure losses at a flow rate of 0.2 m/sec of the composite bodies in the above Examples and Comparative Example and performances of the fuel cell assembled by using such composite bodies are summarized in Table 1.

**Table 1**

| | Example 1 | Example 2 | Comparative Example 1 |
|---|---|---|---|
| Pressure loss (Pa) | 870 | 1100 | about 5000 |
| Maximum electric power (W) | 15 | 10 | 8 |
| Current at maximum electric power (A) | 35 | 30 | 20 |

As seen from FIGS. 4 and 5, since the solid polymer fuel cells in the Examples use the composite body having a high permeability for the electrode, the mass transfer of the fuel gas or the oxidizer gas at the electrode is smoothly conducted and the output power of the fuel cell is not lowered even in a high current range. On the other hand, since the fuel cell of the Comparative Example is low in the permeability of the electrode, the mass transfer of the fuel gas or the oxidizer gas at the electrode is not smoothly conducted and the output power of the fuel cell is lowered in a high current range.

### (Example 3)

A carbon paper (made by Toray Industries, Inc., porous support) as a working electrode is placed in an acidic aqueous solution containing 0.5 mol/L of aniline monomer and 1.0 mol/L of HBF₄, and a platinum plate is used as a counter electrode, and the electrolytic polymerization is carried out at room temperature and a constant current of 10 mA/cm² for 10 minutes to electrodeposit polyaniline on the carbon paper. The resulting polyaniline is washed with an ion exchanged water and dried under vacuum for 24 hours. As observed through SEM, it is confirmed that fibril-shaped polyaniline having a diameter of 50 to 100 nm is formed on a side of the carbon paper facing to the platinum plate.

The polyaniline is subjected together with the carbon paper to a firing treatment by heating up to 950°C at a temperature rising rate of 3°C/min in an Ar atmosphere and then keeping at 950°C for 1 hour. As the fired product is observed through SEM, it is confirmed that fibril-shaped three-dimensionally continuous carbon fibers having a diameter of 40 to 100 nm are formed on the carbon paper. Moreover, the resulting carbon fibers have a residual carbon ratio of 45% and a surface resistance of 1.0 Ω (measured through Loresta IP or Hiresta IP made by Mitsubishi Yuka Co., Ltd.).

Then, platinum is supported on the carbon paper having the carbon fibers by DC sputtering under a condition that a pressure of Ar gas is 0.5 Pa according to the sputtering method (platinum-supporting amount: 0.6 mg/cm²) to prepare an electrode for a solid polymer fuel cell.

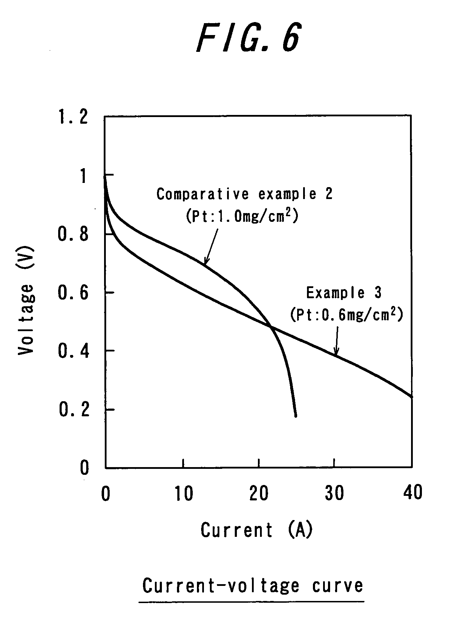

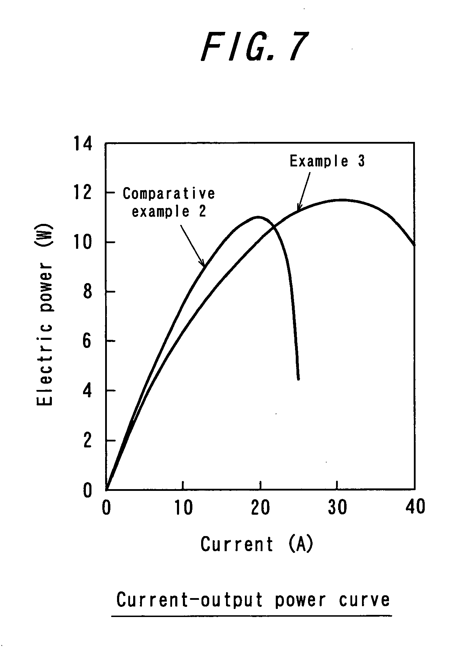

A solution of 5% by mass of Naphion (registered trade mark) is applied to the electrode for the solid polymer fuel cell and dried, and then arranged so as to contact the platinum-supported carbon fibers with each face of a solid polymer electrolyte membrane made of Naphion (registered trade mark) (film thickness: 175 µm), which are hot-pressed to prepare a membrane electrode assembly (MEA). In the thus obtained membrane electrode assembly, the thickness of the catalyst layer is 10 µm and a ratio of platinum-supported carbon fibers/Naphion is 4/1 (by mass). The membrane electrode assembly is incorporated into a test cell made by Electro Chemical Co., Ltd. (EFC25-01SP) to prepare a solid polymer fuel cell. Then, the current-voltage curve and the current-output power curve of the resulting fuel cell are measured under conditions that H₂ flow rate is 300 cm³/min, O₂ flow rate is 300 cm³/min, cell temperature is 80°C and humidity temperature is 80°C. The current-voltage curve of the fuel cell is shown in FIG. 6 and the current-output power curve thereof is shown in FIG. 7.

### (Comparative Example 2)

A fuel cell is made in the same manner as in Example 3 except for the use of a MEA made by Electro Chemical Co., Ltd. (solid polymer electrolyte membrane: Naphion film, film thickness: 130 µm, support: granular carbon, platinum-supporting ratio: 20% by mass, platinum-supporting amount: 1.0 mg/cm²), and the current-voltage curve and the current-output power curve thereof are measured. The results are shown in FIGS. 6 and 7.

As seen from FIG. 6, the fuel cell in the Example can accomplish the electron sweep larger by about 1.6 times than the fuel cell in the Comparative Example. Also, as seen from FIG. 7, the maximum output power of the fuel cell in the Example is larger by 1.1 times than that of the fuel cell in the Comparative Example and its region is shifted to a high load side.

### (Example 4)

A carbon paper (made by Toray Industries, Inc. porous support) as a working electrode is placed in an acidic aqueous solution containing 0.5 mol/L of aniline monomer and 1.0 mol/L of HBF₄, and a platinum plate is used as a counter electrode, and the electrolytic polymerization is carried out at room temperature and a constant current of 10 mA/cm² for 10 minutes to electrodeposit polyaniline on the carbon paper. The resulting polyaniline is washed with an ion exchanged water and dried under vacuum for 24 hours. As observed through SEM, it is confirmed that fibril-shaped polyaniline having a diameter of 50 to 100 nm is formed on a side of the carbon paper facing to the platinum plate.

The polyaniline is subjected together with the carbon paper to a firing treatment by heating up to 950°C at a temperature rising rate of 3°C/min in an Ar atmosphere and then keeping at 950°C for 1 hour. As the fired product is observed through SEM, it is confirmed that fibril-shaped three-dimensionally continuous carbon fibers having a diameter of 40 to 100 nm are formed on the carbon paper. Moreover, the resulting carbon fibers have a residual carbon ratio of 45% and a surface resistance of 1.0 Ω (measured through Loresta IP or Hiresta IP made by Mitsubishi Yuka Co., Ltd.).

Then, the carbon paper having the carbon fibers on its surface is placed as a working electrode in an aqueous solution of 3% by mass of chloroplatinic acid, and a platinum plate is used as a counter electrode, and the electroplating (electrolytic reduction) is carried out at a room temperature and a constant current of 30 mA/cm² for 25 seconds to precipitate platinum on the carbon fibers to thereby form platinum-supported carbon fibers having a platinum-supporting amount of 0.4 mg/cm² on the carbon paper. In this case, the working electrode and the platinum plate are arranged so that a face of the carbon fibers adhered to the carbon paper is faced to the platinum plate.

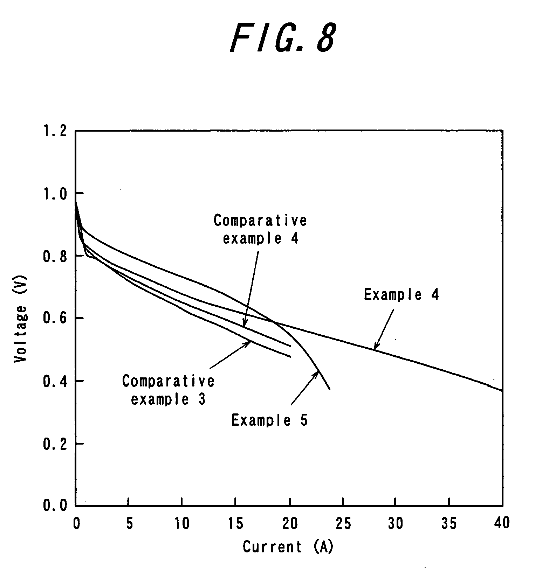

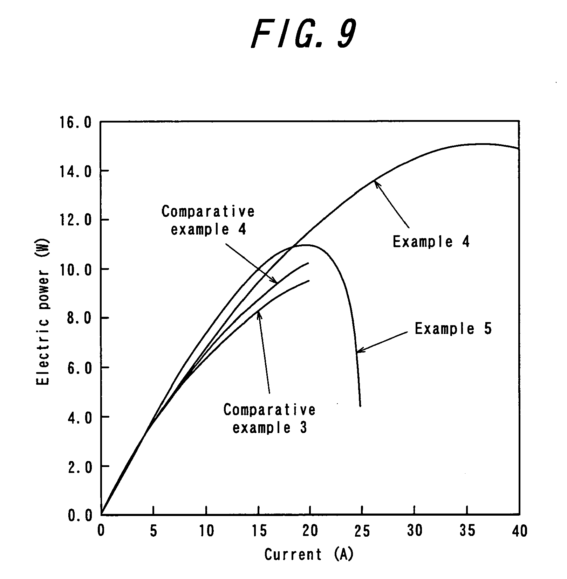

A solution of 5% by mass of Naphion (registered trade mark) is applied to the platinum-supported carbon fibers formed on the carbon paper and dried to form a catalyst layer on the carbon paper. Then, the carbon paper provided with the catalyst layer is arranged so as to contact the catalyst layer with each face of a solid polymer electrolyte membrane made of Naphion (registered trade mark) (film thickness: 130 µm), which are hot-pressed to prepare a membrane electrode assembly (MEA). In the thus obtained membrane electrode assembly, the thickness of the gas diffusion layer is 240 µm, the thickness of the catalyst layer is 10 µm and a ratio of platinum-supported carbon fibers/Naphion is 4/1 (by mass). The membrane electrode assembly is incorporated into a test cell made by Electro Chemical Co., Ltd. (EFC25-01SP, thickness of spacer; 250 µm) and the total thickness of the spacers and the solid polymer electrolyte membrane is compressed to 79.4% to prepare a solid polymer fuel cell. Then, the current-voltage curve and the current-output power curve of the resulting fuel cell are measured under conditions that H₂ flow rate is 300 cm³/min, O₂ flow rate is 300 cm³/min, cell temperature is 80°C and humidity temperature is 80°C. The results are shown in FIGS. 8 and 9.

### (Comparative Example 3)

A fuel cell is made in the same manner as in Example 4 except that a thickness of the gas diffusion layer is 190 µm, a thickness of the solid polymer electrolyte membrane is 175 µm, and the total thickness of the spacers and the solid polymer electrolyte membrane is compressed to 97.9%, and the current-voltage curve and the current-output power curve thereof are measured. The results are shown in FIGS. 8 and 9.

### (Example 5).

A fuel cell is made in the same manner as in Example 4 except that a MEA made by Electro Chemical Co., Ltd. (solid polymer electrolyte membrane: Naphion film, film thickness: 130 µm, support: granular carbon, platinum-supporting ratio: 20% by mass, platinum-supporting amount: 1 mg/cm², thickness of gas diffusion layer: 190 µm, thickness of catalyst layer: 50 µm) is used and the total thickness of the spacers and the solid polymer electrolyte membrane is compressed to 82.0%, and the current-voltage curve and the current-output power curve thereof are measured. The results are shown in FIGS. 8 and 9.

### (Comparative Example 4)

A fuel cell is made in the same manner as in Example 5 except that the total thickness of the spacers and the solid polymer electrolyte membrane is compressed to 92.3%, and the current-voltage curve and the current-output power curve thereof are measured. The results are shown in FIGS. 8 and 9. Moreover, the compression ratios of the Examples and the Comparative Examples are summarized in Table 2.

**Table 2**

| | | Example 4 | Comparative example 3 | Example 5 | Comparative example 4 |
|---|---|---|---|---|---|
| Thickness of gas diffusion layer | | 240 | 190 | 190 | 190 |
| Thickness of catalyst layer | | 10 | 10 | 50 | 50 |
| Thickness of solid polymer electrolyte membrane | | 130 | 175 | 130 | 130 |
| Thickness of spacer | | 250 | 250 | 250 | 250 |
| Thickness before compression A (total thickness of gas diffusion layer × 2, catalyst layer × 2 and solid polymer electrolyte membrane) | µm | 630 | 575 | 610 | 610 |
| Thickness after compression B (total thickness of spacer × 2 and solid polymer electrolyte membrane) | | 500 | 563 | 500 | 563 |
| Compression ratio B/A | % | 79.4 | 97.9 | 82.0 | 92.3 |

As seen from FIGS. 8 and 9, the internal resistance of the fuel cell can be decreased and the voltage and electric power values can be improved by compressing the total thickness of the solid polymer electrolyte membrane, the catalyst layers and the gas diffusion layers (that is a total thickness of the solid polymer electrolyte membrane and the spacers) and rendering the compression ratio within a range specified in the invention. Also, as seen from the comparison between Examples 4 and 5, the lowering of voltage in the high current range can be suppressed by using the three-dimensionally continuous carbon fibers as the support of the catalyst layer.

## Claims

1. A composite body formed by disposing a fibrous material or a bulky material composed mainly of carbon on a substrate composed mainly of carbon or a metal, **characterized in that** a pressure loss of the composite body at a flow rate of 0.2 m/sec is less than 4000 Pa.

2. A composite body according to claim 1, wherein the substrate composed mainly of carbon is a carbon paper, a carbon nonwoven fabric, a carbon cloth, a carbon net or a meshed carbon.

3. A composite body according to claim 1, wherein the substrate composed mainly of the metal is in the form of a woven fabric, a nonwoven fabric, a net, a mesh or a punching metal.

4. A composite body according to claim 1, which is formed by polymerizing a carbon-containing monomer on the substrate composed mainly of carbon or the metal to produce the fibrous material or the bulky material composed mainly of carbon on the substrate.

5. A composite body according to claim 4, which is formed by polymerizing a carbon-containing monomer on the substrate composed mainly of carbon or the metal to produce the fibrous material or the bulky material composed mainly of carbon on the substrate and firing the fibrous material or the bulky material.

6. A composite body according to claim 5, wherein the firing of the fibrous material or the bulky material is conducted in a non-oxidizing atmosphere.

7. A composite body according to claim 4, wherein the carbon-containing monomer has an aromatic ring.

8. A composite body according to claim 7, wherein the carbon-containing monomer has a benzene ring or an aromatic heterocyclic ring.

9. A composite body according to claim 8, wherein the carbon-containing monomer is at least one compound selected from the group consisting of aniline, pyrrole, thiophene and their derivatives.

10. A composite body according to claim 4, wherein the polymerization is an electrolytic oxidative-polymerization.

11. A catalyst structural body formed by supporting a noble metal on the fibrous material or the bulky material of the composite body as claimed in claim 1.

12. An electrode for a solid polymer fuel cell comprising a catalyst structural body as claimed in claim 11.

13. A solid polymer fuel cell comprising an electrode as claimed in claim 12.

14. An electrode for a solid polymer fuel cell formed by oxidative-polymerizing a compound having an aromatic ring on a porous support to produce a fibril-shaped polymer on the porous support, firing the fibril-shaped polymer to produce three-dimensionally continuous carbon fibers and supporting a noble metal on the three-dimensionally continuous carbon fibers by a sputtering method.

15. An electrode for a solid polymer fuel cell according to claim 14, wherein the porous support is a carbon paper.

16. An electrode for a solid polymer fuel cell according to claim 14, wherein the noble metal comprises at least Pt.

17. An electrode for a solid polymer fuel cell according to claim 14, wherein the compound having the aromatic ring is a compound having a benzene ring or an aromatic heterocyclic ring.

18. An electrode for a solid polymer fuel cell according to claim 17, wherein the compound having the aromatic ring is at least one compound selected from the group consisting of aniline, pyrrole, thiophene and their derivatives.

19. An electrode for a solid polymer fuel cell according to claim 14, wherein the oxidative-polymerization is an electrolytic oxidative-polymerization.

20. A method for producing an electrode for a solid polymer fuel cell, which comprises the steps of:
(i) oxidative-polymerizing a compound having an aromatic ring on a porous support to produce a fibril-shaped polymer on the porous support;
(ii) firing the fibril-shaped polymer produced on the porous support to produce three-dimensionally continuous carbon fibers; and
(iii) supporting a noble metal on the three-dimensionally continuous carbon fibers by a sputtering method.

21. A solid polymer fuel cell comprising an electrode as claimed in claim 14.

22. A solid polymer fuel cell comprising a solid polymer electrolyte membrane, catalyst layers arranged on both sides of the solid polymer electrolyte membrane, gas diffusion layers arranged on outer surfaces of the respective catalyst layers and separators arranged on outer surfaces of the respective gas diffusion layers, wherein at least one of the solid polymer electrolyte membrane, the catalyst layers and the gas diffusion layers is compressed, and a ratio (B/A) of a total thickness of the solid polymer electrolyte membrane, the catalyst layers and the diffusing layers after compression B to a total thickness thereof before compression A is 60 to 90%.

23. A solid polymer fuel cell according to claim 22, wherein the catalyst layer is formed by supporting a metal or a metal compound on a conductive support, and the conductive support is three-dimensionally continuous carbon fibers produced by oxidative-polymerizing a compound having an aromatic ring to produce a fibril-shaped polymer and firing the fibril-shaped polymer.

24. A solid polymer fuel cell according to claim 23, wherein the metal or the metal compound comprises at least Pt.

25. A solid polymer fuel cell according to claim 23, wherein the compound having the aromatic ring is a compound having a benzene ring or an aromatic heterocyclic ring.

26. A solid polymer fuel cell according to claim 25, wherein the compound having the aromatic ring is at least one compound selected from the group consisting of aniline, pyrrole, thiophene and their derivatives.

27. A solid polymer fuel cell according to claim 23, wherein the oxidative-polymerization is an electrolytic oxidative-polymerization.

28. A solid polymer fuel cell according to claim 23, wherein the firing is conducted in a non-oxidizing atmosphere.
